# EUROPÄISCHE PATENTSCHRIFT

(11) **EP 1 602 560 B1**
(45) Veröffentlichungstag und Bekanntmachung des Hinweises auf die Patenterteilung: **13.04.2011**
(21) Anmeldenummer: 05010453.8
(22) Anmeldetag: 13.05.2005
(51) Int. Cl.: B62D 15/02, G05D 1/02

(54) **Verfahren und Vorrichtung zum unterstützten Steuern eines Kraftfahrzeuges**
Vehicle steering aid - apparatus and method
Dispositif et méthode d'aides à la direction pour véhicules automobiles

(30) Priorität: 03.06.2004 DE 102004027250
(43) Veröffentlichungstag der Anmeldung: 07.12.2005
(73) Patentinhaber: Magna Mirrors Holding GmbH, 63877 Sailauf (DE)
(72) Erfinder: Schmidt, Christian, 99100 Erfurt (DE)
(74) Vertreter: von den Steinen, Axel

(56) Entgegenhaltungen:
- EP-A- 1 327 559
- DE-A1- 3 813 083
- DE-A1- 19 940 007
- GB-A- 2 357 743

## Beschreibung

Die Erfindung betrifft ein Verfahren sowie eine Vorrichtung zum unterstützten Steuern, insbesondere zum unterstützten Rangieren und Einparken, eines Kraftfahrzeuges.

Es ist aus der Praxis bekannt, einen Fahrer eines Kraftfahrzeuges beim Rangieren, beim Einparken und/oder Ausparken mittels eines sogenannten Fahrerassistenzsystems zu unterstützen. Das Fahrerassistenzsystem umfasst hierzu in der Regel eine Sensorik, die die Umgebung des Kraftfahrzeuges erfasst und hierzu beispielsweise Ultraschallsensoren aufweist. Insbesondere sind Fahrerassistenzsysteme bekannt, die eine Parklücke vermessen und die den Fahrer beim Einparken in eine Parklücke unterstützen.

Beispielsweise ist aus der DE 198 09 416 A1 ein Einparkassistent bekannt, der dem Fahrer eines Kraftfahrzeuges ein von einer Datenverarbeitungseinrichtung berechnetes Fahrmanöver anzeigt und dabei Informationen zur Steuerung des Kraftfahrzeuges in eine bestimmte Ziellage bereitstellt. Bei dem mittels dieses Systems durchgeführten Verfahren wird eine potenzielle Parklücke angefahren und mittels an dem Kraftfahrzeug angeordneter Sensoren vermessen. Anschließend wird in Abhängigkeit von abgespeicherten Referenzwerten bestimmt, ob die Parklücke für einen Einparkvorgang hinreichend groß ist. Wenn dies der Fall ist, wird in Abhängigkeit von den Abmessungen der Parklücke eine Einparkstrategie berechnet und dem Fahrer des Kraftfahrzeuges mittels einer Anzeigeeinrichtung bereitgestellt. Dieser kann dann der vorgeschlagenen Einparkstrategie folgen. Während des Einparkens in die Parklücke wird ein Vergleich zwischen Ist- und Sollwerten durchgeführt, so dass in Abhängigkeit von etwaigen Abweichungen eine korrigierte Einparkstrategie berechnet werden kann. Das in der DE 198 09 416 A1 beschriebene Verfahren liefert aber keine Informationen hinsichtlich der Durchführung der Korrektur.

Des Weiteren ist aus der DE 38 13 083 C3, die als nächstliegender Stand der Technik angesehen wird, eine Einparkhilfe für ein Kraftfahrzeug bekannt, die Abstandsmesseinrichtungen, eine Datenverarbeitungseinrichtung, Steuereinrichtungen sowie eine Anzeigeeinrichtung aufweist. Auf der Anzeigeeinrichtung werden dem Fahrer des Kraftfahrzeuges Informationen bezüglich einer Parkoperation bereitgestellt, um das Kraftfahrzeug in eine bestimmte Zielparkposition steuern zu können.

Grundsätzlich korrespondiert ein systemseitig geplantes Fahrmanöver mit einer geometrischen Kurve, die aus mindestens einem und in der Regel aus mehreren kreisbogenförmigen und/oder geraden Streckenelementen zusammengesetzt ist. Diese geometrische Kurve wird durch Bewegung von einem bestimmten Punkt am Fahrzeug beschrieben. Die Anzeige des Fahrmanövers bezieht sich für jedes Streckenelement auf einen Soll-Lenkwinkel sowie eine Soll-Wegstrecke. Bei einer beispielsweise durch einen Fahrer erfolgenden Umsetzung des systemseitig geplanten Fahrmanövers kann es zu Abweichungen zwischen einer Fahrzeug-Ist-Position und einer Fahrzeug-Ist-Ausrichtung einerseits und einer berechneten Soll-Position und einer berechneten Soll-Ausrichtung anderseits kommen. Die Ausrichtung bezeichnet dabei die Orientierung der Fahrzeuglängsachse. Diese Abweichungen ergeben sich insbesondere dadurch, dass der angezeigte Soll-Lenkwinkel nicht eingehalten wird. Dafür können beispielsweise sowohl ein ungenaues Fahrverhalten des Fahrers des Kraftfahrzeuges, wie eine unzureichende Beachtung des angezeigten Soll-Lenkwinkels, als auch systembedingte Toleranzen, wie ein Lenkradspiel, verantwortlich sein.

Der Erfindung liegt die Aufgabe zugrunde, ein Verfahren und eine Vorrichtung zum unterstützten Steuern eines Kraftfahrzeuges mit einer zuverlässigen Korrekturoption zu schaffen mit dem Ziel, trotz Abweichung ein geplantes Fahrmanöver im Ergebnis korrekt umzusetzen.

Diese Aufgabe ist erfindungsgemäß durch ein Verfahren gelöst, bei dem ein Soll-Fahrpfad mit einem Startpunkt und einem Zielpunkt bestimmt wird und der Soll-Fahrpfad in Form von Soll-Lenkwinkel und Soll-Wegstrecke ausgegeben wird. Anschließend wird das Fahrzeug bewegt. Nach Zurücklegen einer bestimmten Stecke wird eine Ist-Position des Kraftfahrzeuges bestimmt. Bei einer Abweichung der Ist-Position von dem insbesondere entlang eines Kreisbogens verlaufenden Soll-Fahrpfad werden ein Abweichungskreisbogen sowie ein erster und ein zweiter Korrekturkreisbogen bestimmt, wobei der zweite Korrekturkreisbogen eine kongruente Abbildung des Abweichungskreisbogens darstellt und an dem Zielpunkt endet. Anschließend wird auf Grundlage der beiden Korrekturkreisbögen ein korrigierter Soll-Fahrpfad ausgegeben, der das Fahrzeug zum geplanten Zielpunkt, in der für diesen Zielpunkt geplanten Ausrichtung führt. Danach wird eine elektronischen Steuerhilfe angesteuert.

Bei dem Verfahren nach der Erfindung wird also der tatsächlich bereits zurückgelegte, gegebenenfalls einen Abweichungskreisbogen darstellende Fahrpfad berücksichtigt und in Abhängigkeit von diesem Fahrpfad bei Bedarf ein neuer Soll-Fahrpfad berechnet. Fahranweisungen eines Fahrerassistenzsystems, insbesondere eines Einparkassistenten, können bedarfsgerecht korrigiert werden. Der Abweichungskreisbogen ist durch den Startpunkt, die Ist-Position des Kraftfahrzeuges, einen Krümmungsradius sowie einen sich hieraus ergebenden, so genannten Abweichungsfahrwinkel definiert. Der Abweichungsfahrwinkel ist der Winkel, den das Kraftfahrzeug zum Zeitpunkt der Ermittlung der Ist-Position auf dem Abweichungskreisbogen zurückgelegt hat.

Durch Anwendung des erfindungsgemäßen Verfahrens ist es möglich, das betreffende Kraftfahrzeug auch bei einer Abweichung des Ist-Fahrpfades von dem Soll-Fahrpfad bei Erreichen des Zielpunktes in einer Ausrichtung anzuordnen, die der Ausrichtung des Kraftfahrzeuges bei einem Bewegen des Fahrzeuges entlang des ursprünglich berechneten Soll-Fahrpfades entspricht. Durch Ausgabe korrigierter Lenkwinkel und Wegstrecken wird also sichergestellt, dass dem Fahrer des Kraftfahrzeuges hinreichende Informationen zur Verfügung stehen, um das Kraftfahrzeug am Zielpunkt in der ursprünglich berechneten Ausrichtung anzuordnen, und zwar auch dann, wenn sich bei Durchführung eines Fahrmanövers auf Grundlage beispielsweise auf einem Display angezeigter Informationen Abweichungen von dem Soll-Fahrpfad nicht vermeiden lassen. Dies kann beispielsweise schon dadurch gegeben sein, dass ein Fahrer oft erst eine Lenkbewegung durchführt, nachdem er das Fahrzeug in Bewegung gesetzt hat.

Zweckmäßigerweise beziehen sich bei dem Verfahren nach der Erfindung der Soll-Fahrpfad, der Abweichungskreisbogen sowie die Korrekturkreisbögen auf Trajektorien, d.h. auf Bewegungskurven des Kraftfahrzeuges, die durch den Bewegungspfad des Mittelpunkts der Hinterachse des betreffenden Kraftfahrzeugs definiert sind.

Der Soll-Fahrpfad stellt im Regelfall ein Streckenelement dar, das eine ideal kreisförmige Trajektorie mit einer Richtungsangabe ist. Eine solche Trajektorie kann eindeutig durch einen Startpunkt, einen Zielpunkt und ein Drehzentrum definiert werden, wobei die Trajektorie einen Winkel durchläuft, der durch eine durch das Drehzentrum und den Startpunkt definierte Gerade einerseits und eine durch das Drehzentrum und den Zielpunkt definierte Gerade andererseits aufgespannt wird. Ein gerades Streckenelement, das bei einer Geradeausfahrt vorliegt, bildet einen Spezialfall, bei dem das Drehzentrum in unendlicher Entfernung von dem Startpunkt und von dem Zielpunkt liegt. Zur Beschreibung eines solchen Streckenelements genügt die Bestimmung des Startpunktes und des Zielpunktes.

Bei einer bevorzugten Ausführungsform des Verfahrens nach der Erfindung werden ein Abweichungsdrehzentrum für den Abweichungskreisbogen und ein Abstand zwischen dem Startpunkt und dem Abweichungsdrehzentrum bestimmt, wobei das Abweichungsdrehzentrum auf einer durch den Startpunkt und das Soll-Drehzentrum definierten Gerade liegt. Auf diese Weise kann auf einfache Weise ein durch den Startpunkt, die Ist-Position und das Abweichungsdrehzentrum definiertes Kreissegment bestimmt werden, das zur Festlegung des zweiten Korrekturkreisbogens im Bereich des Zielpunktes genutzt werden kann. Hierzu wird in vorteilhafter Weise ein dem zweiten Korrekturkreisbogen zugeordnetes Ausgleichsdrehzentrum festgelegt, das auf einer durch den Zielpunkt und das Soll-Drehzentrum definierten Gerade liegt und das von dem Zielpunkt einen Abstand hat, der dem Abstand zwischen dem Startpunkt und dem Abweichungsdrehzentrum entspricht.

Die Festlegung eines Drehzentrums für den ersten Korrekturkreisbogen erfolgt zweckmäßigerweise durch Bestimmung eines Schnittpunktes einer durch die Ist-Position und das Abweichungsdrehzentrum definierten Gerade mit einer durch das Ausgleichsdrehzentrum und den Abweichungsfahrwinkel definierten Gerade.

Das Verfahren nach der Erfindung wird vorzugsweise gemäß einer voreingestellten Taktung durchgeführt. Die Taktung kann zeitabhängig und/oder wegabhängig erfolgen. Der Abstand der Takte bestimmt die Genauigkeit des durchzuführenden Fahrmanövers und auch den zur Durchführung des Verfahrens erforderlichen Rechenaufwand.

Die Ausgabe des Soll-Fahrpfades bzw. des korrigierten Soll-Fahrpfades kann mittels einer optischen, einer akustischen und/oder einer mechanisch/haptischen Einrichtung erfolgen. So können die durchzuführenden Fahr- bzw. Lenkmanöver beispielsweise auf einem Display angezeigt und/oder auch durch akustische Befehle wiedergegeben werden. Auch ist es denkbar, dass die Ausgabe durch eine Beeinflussung des Lenkverhaltens des Kraftfahrzeuges erfolgt. So können beispielsweise die zu wählenden Lenkwinkel dem Fahrer jeweils durch eine Lenkwinkelbegrenzung vorgegeben werden.

Das Verfahren nach der Erfindung kann insbesondere im unterstützten Einparken eines Kraftfahrzeuges eingesetzt werden, so dass dem Fahrer des betreffenden Kraftfahrzeuges das Einparken erleichtert wird. Das Verfahren kann von dem Fahrer des betreffenden Kraftfahrzeuges beispielsweise angewendet werden, wenn er bei einem längsseitigen Rückwärtseinparkvorgang in eine Parklücke unterstützt werden möchte. Hierzu wird in der Regel zunächst die Parklücke mittels geeigneter, an dem Kraftfahrzeug angebrachter Sensoren vermessen. Der Soll-Fahrpfad entspricht dann einer Einparkstrategie, nach der mit möglichst wenig Lenk- und Rangieraufwand kollisionsfrei in die Parklücke eingeparkt werden kann. Die Einparkstrategie, die durch Zusammensetzen mehrerer aus Kreisbögen zusammengesetzter Soll-Fahrpfade entwickelt wird, erfordert in der Regel Lenk-, Beschleunigungs- und Bremsvorgänge, die dem Fahrer von einem System zur Durchführung des erfindungsgemäßen Verfahrens vorgegeben werden können. Die Ausgabe der Einparkstrategie kann über eine in dem betreffenden Kraftfahrzeug ohnehin vorhandene Anzeigeeinrichtung, wie ein Display eines Navigationssystems, erfolgen.

Die Erfindung hat auch eine Vorrichtung zum unterstützten Steuern, insbesondere zum unterstützten Rangieren und Einparken eines Kraftfahrzeuges zum Gegenstand. Diese Vorrichtung umfasst eine Datenverarbeitungseinrichtung zur Bestimmung eines Soll-Fahrpfades entlang eines Kreisbogens zwischen einem Startpunkt und einem Zielpunkt, eine Ausgabeeinrichtung für den Soll-Fahrpfad und eine Einrichtung zur Ermittlung einer etwaigen Abweichung zwischen einer Ist-Position und dem Soll-Fahrpfad sowie mindestens einen Wegsensor sowie eine elektronische Steuerhilfe. Des Weiteren umfasst die Vorrichtung eine Funktionalität, die bei Abweichung der Ist-Position von dem Soll-Fahrpfad einen Abweichungskreisbogen sowie einen ersten und einen zweiten Korrekturkreisbogen bestimmt, wobei der zweite Korrekturkreisbogen eine kongruente Abbildung des Abweichungskreisbogens ist und an dem Zielpunkt endet, und die den dementsprechend korrigierten Soll-Fahrpfad der elektronischen Steuerhilfe bereitstellt.

Die erfindungsgemäße Vorrichtung stellt insbesondere ein Einparkassistenzsystem dar, das bei einem Einparkmanöver fahrer- und/oder systembedingte Abweichungen zwischen einem Soll-Fahrpfad und einem Ist-Fahrpfad in optimierter Weise korrigiert.

Die Vorrichtung nach der Erfindung wirkt bei einer speziellen Ausführungsform insbesondere auch mit einem Lenkwinkelsensor zusammen, mittels dessen bei der Berechnung der Korrekturkreisbögen eine Abweichung eines Ist-Lenkwinkels von einem Soll-Lenkwinkel berücksichtigt werden kann.

Zusätzlich oder alternativ zu dem Lenkwinkelsensor kann die Vorrichtung nach der Erfindung auch mit mindestens zwei Wegsensoren zusammenwirken, von denen beispielsweise einer dem linken Hinterrad und der andere dem rechten Hinterrad des Kraftfahrzeuges zugeordnet ist. Die Wegsensoren können natürlich auch den Vorderrädern zugeordnet sein.

Des Weiteren kann die Vorrichtung nach der Erfindung einen Zeitgeber umfassen. Der Zeitgeber liefert in vorbestimmten Intervallen ein Signal, das eine Bestimmung der Ist-Position und bei Bedarf die Berechung eines korrigierten Fahrpfades auslöst. Alternativ können die Intervalle zur Bestimmung der Ist-Position und zur Berechung eines korrigierten Fahrpfades auch wegabhängig, d.h. mittels eines Wegsensors, bestimmt werden. Denkbar ist es natürlich auch, die Intervalle durch eine zeit- und wegabhängige Funktion zu bestimmen.

Zwei Ausführungsbeispiele einer Vorrichtung nach der Erfindung sowie zwei Ausführungsbeispiele eines Verfahrens nach der Erfindung sind anhand der Zeichnung schematisch vereinfacht dargestellt und werden in der nachfolgenden Beschreibung näher erläutert.

Es zeigen:
- **Fig. 1**: eine erste Ausführungsform einer erfindungsgemäßen Vor- richtung;
- **Fig. 2**: eine zweite Ausführungsform einer erfindungsgemäßen Vor- richtung;
- **Fig. 3**: eine erste Fahrsituation bei einer Anwendung des erfin- dungsgemäßen Verfahrens;
- **Fig. 4**: eine zweite Fahrsituation bei einer Anwendung des erfin- dungsgemäßen Verfahrens; und
- **Fig. 5**: ein Flussdiagramm zur Durchführung eines erfindungsgemäß ausgeführten Verfahrens.

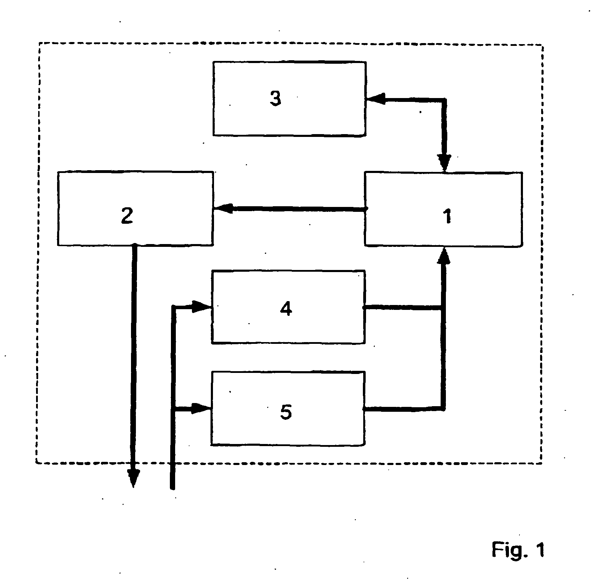

In **Fig. 1** ist eine Vorrichtung zum unterstützten Einparken eines Kraftfahrzeuges in stark schematisierter Weise dargestellt. Die Vorrichtung umfasst eine Datenverarbeitungseinrichtung 1, mittels der ein Fahrmanöver ermittelbar ist, das aus mehreren Streckenabschnitten zusammengesetzt ist, die jeweils einen Soll-Fahrpfad zwischen einem Startpunkt und einem Zielpunkt darstellen. Zur Berechnung des Fahrmanövers wirkt die Datenverarbeitungseinrichtung 1 mit einer hier nicht näher dargestellten Sensorik des Kraftfahrzeuges zusammen, die beispielsweise Ultraschallsensoren zur Erfassung des Kraftfahrzeugumfeldes und zum Vermessen einer Parklücke umfasst.

Zur Ausgabe des ermittelten Fahrmanövers bzw. der zurückzulegenden Streckenabschnitte ist die Datenverarbeitungseinrichtung 1 mit einer Ausgabeeinrichtung 2 verbunden, die z.B. ein Display eines Navigationssystems sein kann und auf der die durchzuführenden Fahrmanöver beispielsweise in Form des bei jedem Streckenelement zu wählenden Soll-Lenkwinkels und der jeweils zurückzulegenden Wegstrecke angezeigt sind.

Des Weiteren wirkt die Datenverarbeitungseinrichtung 1 mit einem Speicher 3 zusammen, in welchem das geplante Soll-Fahrmanöver abgelegt ist, das auf Grundlage der mittels der Sensorik gewonnenen Daten und der Datenverarbeitungseinrichtung 1 ermittelt wurde. In dem Speicher 3 sind also die für die Durchführung des Soll-Fahrmanövers erforderlichen Streckenelemente abgelegt. Diese stellen bei dem erfindungsgemäßen Verfahren jeweils einen Soll-Fahrpfad dar.

Auf der Ausgabeeinrichtung 2 wird für jedes Streckenelement ein Soll-Lenkwinkel und eine zurückzulegende bzw. noch verbleibende Wegstrecke dargestellt. Die auf der Ausgabeeinrichtung 2 dargestellten Fahranweisungen werden von dem Fahrer des Kraftfahrzeuges umgesetzt und können Lenkbewegungen, Bremsmanöver, Beschleunigungsmanöver oder dergleichen umfassen.

Zur Bestimmung der jeweils aktuellen Fahrzeugposition während eines Fahrmanövers und damit der zurückgelegten Wegstrecke umfasst die Vorrichtung des Weiteren ein System 4 zur Ermittlung eines Ist-Lenkwinkels sowie einen Wegsensor 5. Die Ermittlung der Ist-Position kann kontinuierlich oder in mittels eines Zeitgebers vorgegebenen Intervallen erfolgen. Die mittels des Systems 4 und des Wegsensors 5 ermittelten Werte werden an die Datenverarbeitungseinrichtung 1 übergeben, um für das jeweils zu absolvierende Streckenelement in Abhängigkeit von einer Abweichung zwischen den Soll- und den Ist-Werten im Bedarfsfall einen Abweichungskreisbogen und einen ersten und einen zweiten Korrekturkreisbogen zu bestimmen, wobei der zweite Korrekturkreisbogen eine kongruente Abbildung des Abweichungskreisbogens ist und an dem Zielpunkt endet.

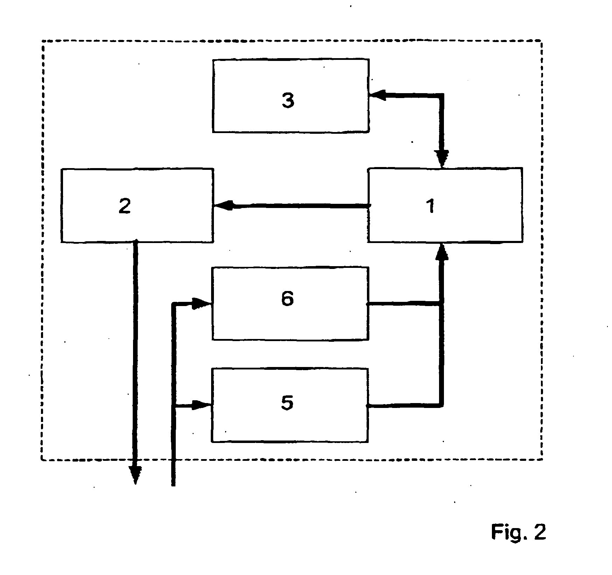

In **Fig. 2** ist eine zweite Ausführungsform einer Vorrichtung zum unterstützten Einparken eines Kraftfahrzeuges dargestellt. Die Vorrichtung nach **Fig. 2** entspricht weitgehend der Vorrichtung nach **Fig. 1****,** unterscheidet sich von dieser aber dadurch, dass sie keinen Lenkwinkelsensor umfasst, sondern statt dessen zwei Wegsensoren 5 und 6 aufweist, von denen jeder jeweils einem linken und rechten Rad des betreffenden Kraftfahrzeuges zugeordnet ist. Mittels zweier derartiger Wegsensoren kann ebenfalls der Ist-Lenkwinkel bestimmt werden.

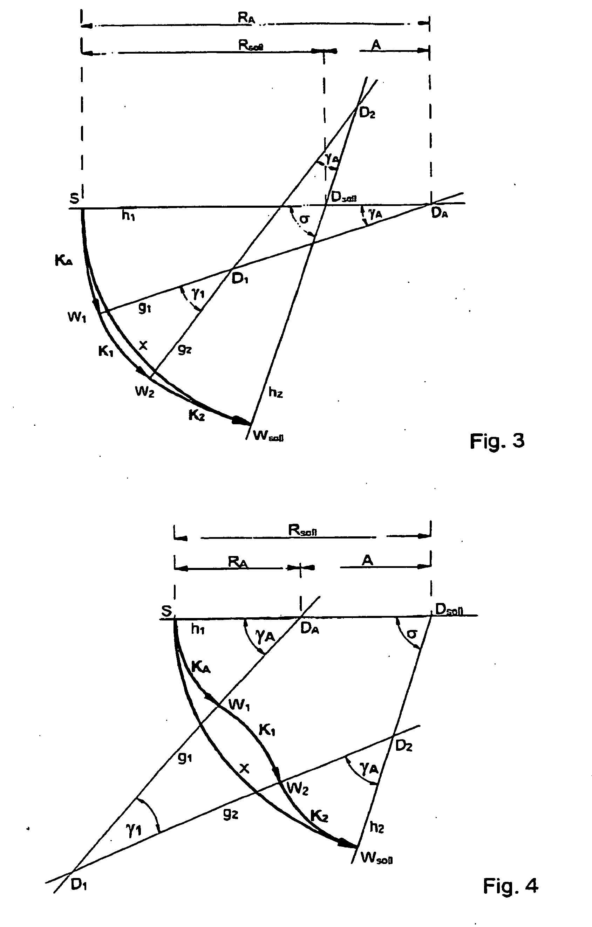

In den **Fig. 3** und **4** ist jeweils eine Fahrsituation dargestellt, bei der eine Abweichung eines Ist-Fahrpfades von einem durch einen Soll-Fahrpfad X vorgegebenen Streckenelement vorliegt. Das Streckenelement X ist eine ideal kreisbogenförmige, eine Richtungsangabe umfassende Trajektorie, welche durch einen Startpunkt S, einen Zielpunkt Wₛₒₗₗ und ein Soll-Drehzentrum Dₛₒₗₗ sowie den sich ergebenden Soll-Radius Rₛₒₗₗ eindeutig definiert ist. Das einen Kreisbogen darstellende Streckenelement X durchläuft einen Winkel σ.

In der Praxis ist ein bei einem Einparkvorgang auszuführendes Fahrmanöver in der Regel aus mehreren kreisbogenförmigen Streckenelementen bzw. Soll-Fahrpfaden zusammengesetzt, die über Wendepunkte miteinander verbunden sind.

Um das aus mehreren Streckenelementen zusammengesetzte Fahrmanöver exakt umzusetzen, d. h. das Kraftfahrzeug möglichst einfach in die betreffende Parklücke manövrieren zu können, ist es erforderlich, dass sich das Kraftfahrzeug an jedem Wendepunkt, d. h. an jedem Start- bzw. Zielpunkt eines jeden Streckenelements in einer definierten Position und Ausrichtung befindet.

Weicht nun der von dem Fahrer des betreffenden Kraftfahrzeuges gewählte Fahrpfad von dem in dem Speicher 3 abgelegten Soll-Fahrpfad ab, verschiebt sich das Soll-Drehzentrum Dₛₒₗₗ zu einem AbweichungsDrehzentrum D_{A}. Das Kraftfahrzeug bewegt sich dann also nicht entlang des Soll-Fahrpfades X, sondern entlang eines Abweichungskreisbogens K_{A}. Damit das Kraftfahrzeug am Zielpunkt Wₛₒₗₗ korrekt ausgerichtet ist, ist nun eine Korrektur des Soll-Fahrpfades erforderlich.

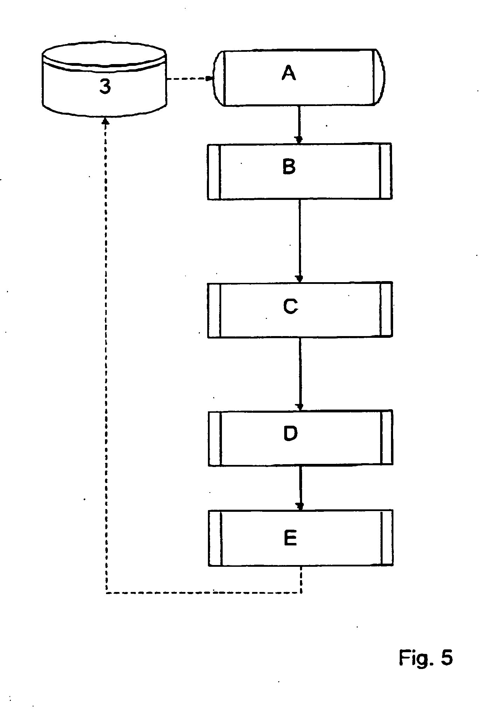

Eine erfindungsgemäße Korrektur der Abweichung von dem Soll-Fahrpfad X wird nachfolgend anhand der **Fig. 3** und **4** sowie anhand des in **Fig. 5** dargestellten Flussdiagramms beschrieben.

In einem ersten Verfahrensschritt A wird der Soll-Fahrpfad X, d. h. das geplante Streckenelement, an der Ausgabeeinrichtung ausgegeben. Anschließend wird das Kraftfahrzeug durch den Fahrer bewegt. Zu einem Zeitpunkt t, welcher mittels Zeitgeber und/oder sich aus einer bestimmten Wegstrecke ergebend, vorgegeben ist, werden eine Ist-Position W₁ des Kraftfahrzeuges sowie ein Ist-Lenkwinkel ermittelt. Wenn die Ist-Position W₁ nicht auf dem Soll-Fahrpfad X liegt, wird in einem Verfahrensschritt B der so genannte Abweichungskreisbogen K_{A} bestimmt, auf dem das Kraftfahrzeug zwischen dem Startpunkt S und der Ist-Position W₁ einen Winkel γ_{A} zurückgelegt hat. Zur Bestimmung des Abweichungskreisbogens K_{A} werden zunächst die Koordinaten der Ist-Position W₁ und die Koordinaten eines Abweichungs-Drehzentrums D_{A} auf einer durch den Startpunkt S und das Soll-Drehzentrum Dₛₒₗₗ definierten Geraden h₁ bestimmt. Diese Koordinaten können beispielsweise mittels des Ist-Lenkwinkels und eines Wegsensors oder auch mittels zweier Wegsensoren ermittelt werden.

Der Abstand zwischen dem Startpunkt S und dem Abweichungsdrehzentrum D_{A} ergibt einen Radius R_{A}. Aus der Differenz zwischen dem Radius R_{A} und dem Soll-Radius Rₛₒₗₗ ergibt sich eine Abweichung A. Durch die Ist-Position W₁ und das Abweichungsdrehzentrum D_{A} wird eine Gerade g₁ definiert. Der Abweichungskreisbogen K_{A} ist durch den Startpunkt S, die Ist-Position W₁ und das Abweichungsdrehzentrum D_{A} definiert. Auf dem Abweichungskreisbogen K_{A} hat das Kraftfahrzeug einen Winkel γ_{A} zurückgelegt, der im Folgenden als so genannter Abweichungsfahrwinkel bezeichnet wird.

In einem nächsten Verfahrensschritt C wird ein Korrekturkreisbogen K₂ ermittelt. Hierzu wird zunächst ein Drehzentrum D₂ ermittelt, das im Abstand R_{A} von dem Zielpunkt Wₛₒₗₗ auf einer Geraden h₂ liegt, die durch den Zielpunkt Wₛₒₗₗ und das Soll-Drehzentrum Dₛₒₗₗ definiert ist. Anschließend wird eine Gerade g₂ bestimmt, die durch das Drehzentrum D₂ läuft und mit der Geraden h₂ den Abweichungsfahrwinkel γ_{A} einschließt. Dann werden die Koordinaten eines Zwischenpunktes W₂ bestimmt, der auf der Geraden g₂ im Abstand R_{A} von dem Drehzentrum D₂ liegt. Durch den Zwischenpunkt W₂, den Zielpunkt Wₛₒₗₗ und das Drehzentrum D₂ ist damit der Korrekturkreisbogen des K₂ definiert, der eine kongruente Abbildung des Abweichungskreisbogens K_{A} darstellt und an dem Zielpunkt Wₛₒₗₗ endet.

In einem nächsten Verfahrensschritt D wird ein Korrekturkreisbogen K₁ ermittelt, der die Ist-Position W₁ und den Zwischenpunkt W₂ verbindet. Für den Korrekturkreisbogen K₁ ergibt sich ein Drehzentrum D₁, das im Schnittpunkt der Geraden g₁ und g₂ liegt. Aus der Differenz der Steigung der Geraden g₂ und der Steigung der Geraden g₁ ergibt sich für den Korrekturkreisbogen K₁ ein Drehwinkel γ₁. Der Korrekturkreisbogen K₁ ist durch das Drehzentrum D₁, die Ist-Position W₁ und den Zwischenpunkt W₂ definiert.

In einem nächsten Verfahrensschritt E werden die Korrekturkreisbögen K₁ und K₂ in den Speicher 3 für die geplanten Soll-Streckenelemente geschrieben. Hierbei ist zu berücksichtigen, dass der Korrekturkreisbogen K₁ vor dem Korrekturkreisbogen K₂ abgearbeitet wird. Die dann in dem Speicher abgelegten Korrekturkreisbögen K₁ und K₂ werden anschließend wiederum in einem Verfahrensschritt A in Form von Fahranweisungen an der Ausgabeeinrichtung der erfindungsgemäßen Vorrichtung angezeigt. Bei einer erneuten Abweichung einer Ist-Position des Kraftfahrzeuges von dem neu berechneten Soll-Fahrpfad können die Verfahrensschritte B bis E erneut ausgeführt werden.

## Patentansprüche

1. Verfahren zum unterstützten Steuern, insbesondere zum unterstützten Rangieren und Einparken eines Kraftfahrzeuges, umfassend folgende Schritte:
- Bestimmen eines Soll-Fahrpfades (X) mit einem Startpunkt (S) und einem Zielpunkt (Wₛₒₗₗ);
- Ausgabe des Soll-Fahrpfades (X);
- Bewegen des Kraftfahrzeuges;
**dadurch gekennzeichnet,**
**dass** eine Ist-Position (W₁) des Kraftfahrzeuges bestimmt wird, wobei bei einer Abweichung der Ist-Position (W₁) von dem Soll-Fahrpfad (X) ein zurückgelegter Abweichungskreisbogen (K_{A}) sowie ein erster (K₁) und ein zweiter (K₂) Korrekturkreisbogen bestimmt werden, und der zweite Korrekturkreisbogen (K₂) eine kongruente Abbildung des Abweichungskreisbogens (K_{A}) ist, und an dem Zielpunkt (Wₛₒₗₗ) endet, und ein korrigierter Soll-Fahrpfad (K₁, K₂) ausgegeben wird; und eine elektronische Steuerhilfe angesteuert wird.

2. Verfahren nach Anspruch 1,
**dadurch gekennzeichnet,**
**dass** ein Abweichungsdrehzentrum (D_{A}) für den Abweichungskreisbogen (K_{A}) und ein Abstand (R_{A}) zwischen dem Startpunkt (S) und dem Abweichungsdrehzentrum (D_{A}) bestimmt werden, wobei das Abweichungsdrehzentrum (D_{A}) auf einer durch den Startpunkt (S) und ein Soll-Drehzentrum (Dₛₒₗₗ) definierten Gerade (h₁) liegt.

3. Verfahren nach Anspruch 2,
**dadurch gekennzeichnet,**
**dass** auf einer durch den Zielpunkt (Wₛₒₗₗ) und das Soll-Drehzentrum (Dₛₒₗₗ) definierten Gerade (h₂) ein dem zweiten Korrekturkreisbogen (K₂) zugeordnetes Ausgleichsdrehzentrum (D₂) bestimmt wird, das von dem Zielpunkt (Wₛₒₗₗ) einen Abstand hat, der dem Abstand zwischen dem Startpunkt (S) und dem Abweichungsdrehzentrum (D_{A}) entspricht.

4. Verfahren nach Anspruch 3,
**dadurch gekennzeichnet,**
**dass** für den ersten Korrekturkreisbogen (K₁) ein Drehzentrum (D₁) festgelegt wird, das durch einen Schnittpunkt einer durch die Ist-Position (W₁) und das Abweichungsdrehzentrum (D_{A}) definierten Gerade (g₁) und einer durch das Ausgleichsdrehzentrum (D₂) und den Abweichungsfahrwinkel (γ_{A}) definierten Gerade (g₂) bestimmt wird.

5. Verfahren nach einem der Ansprüche 1 bis 4,
**dadurch gekennzeichnet,**
**dass** der Soll-Fahrpfad (X) und der korrigierte Sollfahrpfad (K₁, K₂) in einer Speichereinrichtung (3) abgelegt werden.

6. Verfahren nach einem der Ansprüche 1 bis 4,
**dadurch gekennzeichnet,**
**dass** die Ist-Position (W₁) gemäß einer zeitabhängigen und/oder wegabhängigen Taktung bestimmt wird.

7. Verfahren nach einem der Ansprüche 1 bis 5,
**dadurch gekennzeichnet,**
**dass** die Ausgabe des Soll-Fahrpfades und des korrigierten Soll-Fahrpfades mittels einer optischen und/oder akustischen und/oder mechanisch/haptischen Anzeige-Einrichtung erfolgt.

8. Vorrichtung zum unterstützten Steuern, insbesondere zum unterstützen Einparken eines Kraftfahrzeuges, umfassend eine Datenverarbeitungseinrichtung (1) zur Bestimmung eines Soll-Fahrpfades (X) zwischen einem Startpunkt (S) und einem Zielpunkt (Wₛₒₗₗ), eine Ausgabe-Einrichtung (2) für den Soll-Fahrpfad (X) sowie mindestens einen Wegsensor (5, 6),sowie eine elektronische Steuerhilfe,
**gekennzeichnet durch**
eine Einrichtung zur Ermittlung einer etwaigen Abweichung zwischen einer Ist-Position (W₁) von dem Soll-Fahrpfad (X) und eine Funktionalität, die bei Abweichung der Ist-Position (W₁) von dem Soll-Fahrpfad (X) einen Abweichungskreisbogen (K_{A}) und einen ersten (K₁) und einen zweiten (K₂) Korrekturkreisbogen bestimmt, wobei der zweite Korrekturkreisbogen (K₂) eine kongruente Abbildung des Abweichungskreisbogens (K_{A}) ist und an dem Zielpunkt (Wₛₒₗₗ) endet, und die den dementsprechend korrigierten Soll-Fahrpfad der elektronischen Steuerhilfe bereitstellt.

9. Vorrichtung nach Anspruch 8,
**gekennzeichnet durch**
eine Speichereinrichtung (3) für den Soll-Fahrpfad.

10. Vorrichtung nach Anspruch 8 oder 9,
**gekennzeichnet durch**
einen Lenkwinkelsensor (4).

11. Vorrichtung nach einem der Ansprüche 8 bis 10,
**gekennzeichnet durch**
zwei Wegsensoren (5, 6), von denen einer mit einem linken Rad und der andere mit einem rechten Rad des Kraftfahrzeuges zusammenwirkt.

## Claims

1. A method for the assisted steering, particularly the assisted manoeuvring and parking, of a motor vehicle, comprising the following steps:
- determining a nominal driving path (X) with a starting point (S) and a destination point (Wₙₒₘᵢₙₐₗ);
- outputting the nominal driving path (X), and
- setting the motor vehicle in motion,
**characterized in that**
an actual position (W₁) of the motor vehicle is determined, wherein a deviant circular arc (K_{A}) travelled as well as a first (K₁) and a second (K₂) corrective circular arc are determined if the actual position (W₁) deviates from the nominal driving path (X), wherein the second corrective circular arc (K₂) is a congruent projection of the deviant circular arc (K_{A}) and ends at the destination point (Wₙₒₘᵢₙₐₗ), and wherein a corrected nominal driving path (K₁, K₂) is output, and
an electronic steering aid is triggered.

2. The method according to Claim 1,
**characterized in that**
a deviant centre of rotation (D_{A}) for the deviant circular arc (K_{A}) and a distance (R_{A}) between the starting point (S) and the deviant centre of rotation (D_{A}) are determined, wherein the deviant centre of rotation (D_{A}) lies on a line (h₁) that is defined by the starting point (S) and a nominal centre of rotation (Dₙₒₘᵢₙₐₗ).

3. The method according to Claim 2,
**characterized in that**
a compensative centre of rotation (D₂) for the second corrective circular arc (K₂) is determined on a line (h₂) that is defined by the destination point (Wₙₒₘᵢₙₐₗ) and the nominal centre of rotation (Dₙₒₘᵢₙₐₗ), wherein this compensative centre of rotation is spaced apart from the destination point (Wₙₒₘᵢₙₐₗ) by a distance that corresponds to the distance between the starting point (S) and the deviant centre of rotation (D_{A}).

4. The method according to Claim 3,
**characterized in that**
the centre of rotation (D₁) for the first corrective circular arc (K₁) lies in the intersecting point between a line (g₁) that is defined by the actual position (W₁) and the deviant centre of rotation (D_{A}) and a line (g₂) that is defined by the compensative centre of rotation (D₂) and the deviant steering angle (γ_{A}).

5. The method according to one of Claims 1 to 4,
**characterized in that**
the nominal driving path (X) and the corrected nominal driving path (K₁, K₂) are stored in a memory (3).

6. The method according to one of Claims 1 to 4,
**characterized in that**
the actual position (W₁) is determined in accordance with a time-dependent and/or distance-dependent clocking.

7. The method according to one of Claims 1 to 5,
**characterized in that**
the nominal driving path and the corrected nominal driving path are output by means of an optical and/or acoustical and/or mechanical/haptical indicating unit.

8. A device for the assisted steering, particularly the assisted manoeuvring and parking, of a motor vehicle, comprising a data processing unit (1) for determining a nominal driving path (X) between a starting point (S) and a destination point (Wₙₒₘᵢₙₐₗ), an output unit (2) for the nominal driving path (X) and at least one displacement sensor (5, 6), as well as an electronic steering aid,
**characterized by**
a device for determining whether or not the actual position (W₁) deviates from the nominal driving path (X) and a unit that determines a deviant circular arc (K_{A}) as well as a first (K₁) and a second (K₂) corrective circular arc if the actual position (W₁) deviates from the nominal driving path (X), wherein the second corrective circular arc (K₂) is a congruent projection of the deviant circular arc (K_{A}) and ends at the destination point (Wₙₒₘᵢₙₐₗ) and wherein said unit provides the correspondingly corrected nominal driving path to the electronic steering aid.

9. The device according to Claim 8,
**characterized in that**
it contains a memory (3) for the nominal driving path.

10. The device according to Claim 8 or 9,
**characterized in that**
it contains a steering angle sensor (4).

11. The device according to one of Claims 8 to 10,
**characterized in that**
it contains two displacement sensors (5, 6) that respectively cooperate with a left wheel and a right wheel of the motor vehicle.

## Revendications

1. Procédé pour la direction assistée, en particulier pour les manoeuvres et le stationnement assistés, d'un véhicule automobile, comprenant les étapes suivantes:
- déterminer une trajectoire nominale (X) avec un point de départ (S) et un point de destination (Wₙₒₘᵢₙₐₗ),
- rendre la trajectoire nominale (X) et
- mettre en marche le véhicule automobile,
**caractérisé en ce qu'**
une position courante (W₁) du véhicule automobile est déterminée, un arc de cercle déviant (K_{A}) qui a été parcouru ainsi qu'un premier (K₁) et un second (K₂) arc de cercle correctif étant déterminés si la position courante (W₁) dévie de la trajectoire nominale (X), et le second arc de cercle correctif (K₂) étant une projection congruente de l'arc de cercle déviant (K_{A}) et se terminant par le point de destination (Wₙₒₘᵢₙₐₗ), et une trajectoire nominale corrigée (K₁, K₂) étant rendue, et
une aide à la direction électronique est activée.

2. Procédé selon la revendication 1,
**caractérisé en ce qu'**
un centre de rotation déviant (D_{A}) pour l'arc de cercle déviant (K_{A}) et une distance (R_{A}) entre le point de départ (S) et le centre de rotation déviant (D_{A}) sont déterminés, le centre de rotation déviant (D_{A}) se trouvant sur une ligne droite (h₁) qui est définie par le point de départ (S) et un centre de rotation nominal (Dₙₒₘᵢₙₐₗ).

3. Procédé selon la revendication 2,
**caractérisé en ce qu'**
un centre de rotation compensatoire (D₂) pour le second arc de cercle correctif (K₂) est déterminé sur une ligne droite (h₂) qui est définie par le point de destination (Wₙₒₘᵢₙₐₗ) et le centre de rotation nominal (Dₙₒₘᵢₙₐₗ), le centre de rotation compensatoire étant éloigné du point de destination (Wₙₒₘᵢₙₐₗ) avec une distance correspondant à la distance entre le point de départ (S) et le centre de rotation déviant (D_{A}).

4. Procédé selon la revendication 3,
**caractérisé en ce que**
le centre de rotation (D₁) pour le premier arc de cercle correctif (K₁) se trouve dans le point d'intersection entre une ligne droite (g₁) qui est définie par la position courante (W₁) et le centre de rotation déviant (D_{A}) et une ligne droite (g₂) qui est définie par le centre de rotation compensatoire (D₂) et l'angle de braquage déviant (γ_{A}).

5. Procédé selon l'une quelconque des revendications 1 à 4,
**caractérisé en ce que**
la trajectoire nominale (X) et la trajectoire nominale corrigée (K₁, K₂) sont stockées dans une mémoire (3).

6. Procédé selon l'une quelconque des revendications 1 à 4,
**caractérisé en ce que**
la position courante (W₁) est déterminée en correspondance avec une cadence dépendant du temps et/ou dépendant de la distance.

7. Procédé selon l'une quelconque des revendications 1 à 5,
**caractérisé en ce que**
la trajectoire nominale et la trajectoire nominale corrigée sont rendues au moyen d'un dispositif d'affichage optique et/ou acoustique et/ou mécanique/haptique.

8. Procédé pour la direction assistée, en particulier pour les manoeuvres et le stationnement assistés, d'un véhicule automobile, comprenant une unité de traitement de données (1) pour la détermination d'une trajectoire nominale (X) entre un point de départ (S) et un point de destination (Wₙₒₘᵢₙₐₗ), une unité de rendement (2) pour la trajectoire nominale (X) et au moins un capteur de déplacement (5,6) ainsi qu'une aide à la direction électronique,
**caractérisé par**
un dispositif pour la détermination si la position courante (W₁) dévie de la trajectoire nominale (X) et une unité qui détermine un arc de cercle déviant (K_{A}) ainsi qu'un premier (K₁) et un second (K₂) arc de cercle correctif si la position courante (W₁) dévie de la trajectoire nominale (X), le second arc de cercle correctif (K₂) étant une projection congruente de l'arc de cercle déviant (K_{A}) et se terminant par le point de destination (Wₙₒₘᵢₙₐₗ), et ladite unité mettant ladite trajectoire nominale corrigée à la disposition de l'aide de direction électronique.

9. Dispositif selon la revendication 8,
**caractérisé par**
une mémoire (3) pour la trajectoire nominale.

10. Dispositif selon la revendication 8 ou 9,
**caractérisé par**
un capteur de l'angle de braquage (4).

11. Dispositif selon l'une quelconque des revendications 8 à 10,
**caractérisé par**
deux capteurs de déplacement (5,6) coopérant respectivement avec une roue gauche et une roue droite du véhicule automobile.
